# EUROPÄISCHE PATENTSCHRIFT

(11) **EP 0 672 337 B1**
(45) Veröffentlichungstag und Bekanntmachung des Hinweises auf die Patenterteilung: **10.02.1999**
(21) Anmeldenummer: 95103543.5
(22) Anmeldetag: 11.03.1995
(51) Int. Cl.: A01D 34/86

(54) **An ein Trägerfahrzeug heckseitig anbaubares Mähgerät**
Mowing device mounted on the rear of a vehicle
Dispositif faucheur monté à l'arrière d'un véhicule

(30) Priorität: 15.03.1994 DE 4408750
(43) Veröffentlichungstag der Anmeldung: 20.09.1995
(73) Patentinhaber: Schmidt Holding Europe GmbH, 79837 St. Blasien (DE)
(72) Erfinder: Prieur-Blanc, Serge, F-38140 Rives-sur-Fures (FR); Hueber, Claude, F-38430 Saint Jean-de-Moirans (FR)
(74) Vertreter: Grättinger, Günter

(56) Entgegenhaltungen:
- EP-A- 0 363 068
- DE-A- 2 413 581
- DE-A- 3 218 525
- DE-B- 1 141 828
- FR-A- 2 701 627
- GB-A- 2 059 740

## Beschreibung

Die Erfindung betrifft ein an einem Trägerfahrzeug heckseitig anbaubares Mähgerät für Straßenböschungen und -banketten mit einem seitlich ausschwenkbaren Ausleger, dessen Hauptarm an einem fahrzeugfesten Rahmen angelenkt ist und einen Pendelarm trägt, an dessen freiem Ende ein Mähwerk aufgehängt ist.

Derartige Mähgeräte sind entweder an der Heckanbauplatte eines Schleppers montiert oder, wie in der deutschen Offenlegungsschrift 24 13 581 beschrieben, auf der Fahrzeugpritsche eines geeigneten Trägerfahrzeugs. Im letztgenannten Fall ist der Ausleger auf einer seitlich verschiebbaren Konsole gelagert, die ein dichtes Heranfahren des Mähwerks an das Fahrzeug ermöglicht und außerdem Raum schafft für das Verstauen des Mähgeräts in einer sicheren Position hinter der Fahrerkabine. Allerdings befindet sich bei dem bekannten Mähgerät die Arbeitsposition des Mähwerks in seitlicher Verlängerung der Konsole, d. h. von der Fahrerkabine aus kann das Mähwerk nicht direkt beobachtet werden sondern bestenfalls über einen Rückspiegel bzw. es ist ein Beifahrer von Nöten, der das Mähwerk beobachtet, indem er sich nach rückwärts wendet.

Bei einem anderen bekannten Heck-Ausleger-Mähgerät für Schlepper ist zwischen dem Hauptarm und dem Pendelarm des Auslegers ein in Fahrzeugrichtung erstreckter Versatzarm vorgesehen. Damit wird erreicht, daß das Mähwerk im Arbeitseinsatz etwa seitlich neben der Fahrerkabine positioniert ist, so daß es von dort aus gut beobachtet werden kann. Durch den seitlichen Versatzarm wird der Ausleger jedoch verhältnismäßig instabil und schwer; außerdem erfordert das bekannte Mähgerät, um es in der Transportstellung verstauen zu können, ein zusätzliches Drehgelenk mit vertikaler Schwenkachse, um welche der Hauptarm nach rückwärts einschwenkbar ist.

Demgegenüber liegt der vorliegenden Erfindung die Aufgabe zugrunde, ein Mähgerät der gattungsgemäßen Art in der Weise zu verbessern, daß es ohne Versatzarm auskommt und trotzdem im Arbeitseinsatz aus der Fahrerkabine gut beobachtet werden kann und daß es ohne zusätzliches Drehgelenk zum Einschwenken in die Transportstellung auskommt aber dennoch innerhalb des seitlichen Raumprofils des Trägerfahrzeugs verstaut werden kann; außerdem soll es stabil sein und für den Heckanbau ab Schlepperleistungen von etwa 75 PS geeignet sein.

Die erfindungsgemäße Aufgabe wird mit den Merkmalen im Kennzeichen von Anspruch 1 gelöst.

Mit diesem Vorschlag wird der Versatz des Mähgeräts nach vorne im wesentlichen durch die asymmetrische Ausbildung des Hauptarms erreicht, dessen oberes Ende gegenüber seiner fahrzeugseitigen Schwenklagerung nach vorne versetzt ist; dadurch wandert die Anlenkung des Gelenkkopfs und damit des Pendelarms entsprechend nach vorne, was noch durch geeignete Ausbildung des Gelenkkopfs sowie der Art der Anlenkung des Pendelarms am Gelenkkopf verstärkt werden kann. Durch die Summe dieser Maßnahmen ergibt sich ein Versatz des Mähwerks nach vorne gegenüber der heckseitigen Anbauplatte des Fahrzeugs zwischen 1400 und 1800 mm, womit erreicht ist, daß der Fahrer bzw. sein Beifahrer das im Arbeitseinsatz befindliche Mähwerk unmittelbar seitlich von der Fahrerkabine beobachten kann. Diese nach vorne versetzte Positionierung des Mähwerks ist entscheidend für die Brauchbarkeit des Mähgeräts, weil erst dadurch eine genaue Kontrolle der Mähspur möglich ist. Der Gelenkkopf selbst kann dabei in Fahrzeuglängsrichtung gesehen verhältnismäßig kurz gehalten werden z. B. eine Länge von etwa 500 mm oder darunter aufweisen. Auf diese Weise wird die Stabilität des Auslegers nicht beeinträchtigt.

Der große Versatz des Mähwerks nach vorne bringt den weiteren Vorteil mit sich, daß der Schwerpunkt des Mähwerks entsprechend nach vorne wandert und damit eine Verbesserung der Kippsicherheit des Trägerfahrzeugs erzielt wird; dies wirkt sich mit zunehmender Auslage des Mähwerks besonders günstig aus.

Infolge der gewählten Asymmetrie des Hauptarms ergibt sich zudem eine verbesserte Kraftableitung der Schnittkräfte, d. h., die über das Mähwerk und den Pendelarm auf den Hauptarm übertragenen Seitenkräfte können vom Hauptarm vorteilhaft aufgenommen werden.

Vorteilhafte Ausgestaltungen eines Mähgeräts nach Anspruch 1 sind in den Unteransprüchen gekennzeichnet.

Nach einer bevorzugten Ausführung ist vorgesehen, daß der Gelenkkopf am Hauptarm um eine zu dessen Schwenkachse etwa parallele Schwenkachse verschwenkbar angelenkt ist und daß die Schwenkachse des Pendelarms am Gelenkkopf in einer zu dessen Schwenkachse etwa senkrechten Ebene liegt. Dementsprechend ist die Schwenkachse des Gelenkkopfs im oberen Ende des Hauptarms derart gelagert, daß der Gelenkkopf für die Mäharbeiten unmittelbar neben dem Fahrzeug dicht an den Hauptarm herangeklappt werden kann und für Mäharbeiten mit größerer Auslage entsprechend gegenüber dem Hauptarm gestreckt wird, so daß der Gelenkkopf bei maximaler Auslage den Hauptarm entsprechend verlängert. Der Pendelarm ist in einer Ebene verschwenkbar, welche zum Hauptarm je nach Schwenklage des Gelenkkopfs mehr oder weniger schräg und außerdem etwa parallel zur Fahrzeuglängsrichtung verläuft. In einer weiten Auslageposition schließt der Hauptarm mit dieser Ebene einen stumpfen Winkel ein; in einer engen Auslageposition, also bei Mäharbeiten dicht neben dem Fahrzeug stößt der Hauptarm spitzwinkelig auf die genannte Ebene.

Als Konstruktionsrichtlinie für die Ausbildung des Hauptarms gilt, daß er zwischen seiner Schwenkachse am Rahmen und der Schwenkachse des Gelenkkopfs schräg nach vorne verläuft derart, daß diese beiden Schwenkachsen in Fahrzeuglängsrichtung zueinander versetzt sind um eine Länge, welche etwa der Entfernung des Rahmens von der Rückwand der Fahrerkabine entspricht.

Bezüglich des Schwenkbereichs des Pendelarms ist vorgesehen, daß dieser gegenüber dem Gelenkkopf zwischen einer vorderen Arbeitsstellung, in welcher er sich etwa auf der Höhe der Fahrerposition in einer Ebene senkrecht zur Fahrzeuglängsrichtung erstreckt, und einer hinteren Transportstellung, in welcher er sich etwa parallel zur Fahrzeuglängsrichtung erstreckt, verschwenkbar ist. Es kann zweckmäßig sein, Arbeitsstellungen zuzulassen, welche noch etwas weiter vorne als die genannte vordere Arbeitsstellung bzw. gegenüber dieser auch weiter hinten liegen, so daß sich das Mähwerk in einer Art Schleppstellung befindet; diese besonderen Stellungen des Pendelarms können vorteilhaft dann in Frage kommen, wenn das Mähen eine Anpassung der Mähwerksposition an schräge Böschungen erfordert.

Eine zweckmäßige Ausführungsform des Hauptarms besteht darin, daß dieser zwei verschieden lange Holme umfaßt, welche mit einem rahmenseitigen Lagerteil einen Dreiecksträger bilden, dessen Spitze nach vorne versetzt ist und die Schwenkachse für den Gelenkkopf trägt. Eine derartige Ausführungsform des Hauptarms entspricht den auf ihn einwirkenden äußeren Kräften und ist gewichtsparend.

In einer bevorzugten Ausführungsform weist der Gelenkkopf ein in Fahrzeuglängsrichtung profiliertes, im oberen Teil kastenförmig ausgebildetes, nach unten offenes Gehäuse auf, in welchem die Schwenkachsen für den Hauptarm und den Pendelarm gelagert sind. Durch die Ausbildung des Gelenkkopfs als teils kastenförmig verstärktes teils offenes Profil, welches jedoch in Fahrzeuglängsrichtung relativ kurz ist, können erhebliche Kräfte verformungsfrei aufgenommen werden. Maßgeblich für die Dimensionierung des das Gehäuse des Gelenkkopfs bildenden Hohlprofils sind dabei die bei Schnittanfang auftretenden Spitzenbelastungen.

Gegenüber dem Hauptarm ist der Gelenkkopf - und mit ihm der Pendelarm - zwischen einer inneren, fahrzeugnahen und einer äußeren, fahrzeugfernen Arbeitsposition des Mähwerks verschwenkbar, wobei der Hauptarm selbst wiederum zwischen einer steilen und einer flach geneigten Schwenkposition je nach Auslage des Mähwerks verstellbar ist. Die Verstellung des Hauptarms kann aber auch von der Lage der Mähfläche bezüglich des Fahrniveaus des Trägerfahrzeugs abhängen, d. h. nach unten abfallende Böschungen erfordern einen abgesenkten Hauptarm, während bei ansteigenden Böschungen der Hauptarm entsprechend angehoben ist.

Um zu verhindern, daß beim Rückschwenken des Pendelarms aus einer fahrzeugnahen Arbeitsstellung in die Transportstellung eine Berührung zwischen dem Mähwerk und dem Trägerfahrzeug erfolgt, ist erfindungsgemäß vorgesehen, daß die Schwenkachse des Pendelarms in der maximal eingeschwenkten Position des Gelenkkopfs von innen nach außen geringfügig schräg abfallend verläuft. Auf diese Weise wird erreicht, daß sich der Gelenkkopf längs einer vom Trägerfahrzeug wegführenden Kreisbahn bewegt.

Zur Unterstützung der Verbindung zwischen dem Mähgerät und dem Trägerfahrzeug ist weiterhin am Rahmen eine Tragplatte vorgesehen, welche Verbindungselemente für deren lösbaren Anschluß an eine heckseitige Fahrzeugplatte aufweist; bevorzugt auf der dem Mähwerk Zugewandten Seite des Rahmens kann noch eine Stütze befestigt stigt sein, welche den Rahmen gegenüber der zugeordneten Radachse zusätzlich abstützt. Auf diese Weise gelingt es, die einseitigen Lasten während des Arbeitseinsatzes des Mähgeräts besser auf das Chassis des Trägerfahrzeugs zu verteilen. Zum Zwecke des Gewichtsausgleichs kann es nützlich sein, den linken rückwärtigen Reifen des Trägerfahrzeugs mit Wasser weitgehend zu füllen, eine Maßnahme, die bei Schleppern mit extrem einseitiger Belastung durchaus üblich ist.

Wird der Pendelarm aus der Arbeits- in die Transportstellung bewegt, so wird zunächst der Hauptarm in eine angehobene Position gebracht, wonach der Pendelarm zum Hauptarm hingeschwenkt und weiter nach hinten weggeschwenkt wird; das vollständige Aufschwenken des Hauptarms erfolgt, nachdem das Mähwerk eingekippt ist, bis es im wesentlichen eine zum Pendelarm parallele Lage einnimmt. In der Transportstellung ist der Hauptarm somit steiler aufgestellt als in seiner steilsten Arbeitsstellung, nämlich bis in die Vertikale oder sogar noch darüber. In dieser Transportstellung fügt sich das komplette Mähgerät in das heckseitige Profil des Schleppers ein, derart, daß es das Schlepperprofil lediglich nach oben, nicht jedoch zur Seite hin überragt.

Zum Betätigen des Hauptarms, des Gelenkkopfs, des Pendelarms sowie zum Verschwenken des Mähwerks gegenüber dem Pendelarm sind jeweils hydraulische Kolben-Zylinder-Einheiten vorgesehen, die bevorzugt derart angeordnet und dimensioniert sind, daß in der Transportstellung alle Kolben dieser Kolben-Zylinder-Einheiten eingefahren sind und damit während der Transportfahrt bzw. solange das Mähgerät nicht im Einsatz ist, korrosionsgeschützt sind.

Die übliche Ausführungsform des erfindungsgemäßen Mähgeräts eignet sich für das Arbeiten auf der rechten Seite des Trägerfahrzeugs; für Länder mit Linksverkehr ist es denkbar, das erfindungsgemäße Mähgerät für die Linksauslage zu adaptieren.

Als Mähwerk eignet sich bevorzugt ein sog. Schlegelmähkopf, dessen Messerwelle über ein durch einen Hydraulikmotor angetriebenes Kettengetriebe betätigt wird. Die Messerwelle des Mähwerks ist vorteilhaft mit speziellen Schlegelmessern ausgerüstet, die für alle Mäharbeiten geeignet sind.

Im folgenden wird ein Ausführungsbeispiel der Erfindung anhand der Zeichnung erläutert. Es zeigt
- Fig. 1: eine perspektivische Darstellung des an einem Schlepper angebauten Mähgeräts in einer Arbeitsstellung nahe dem Trägerfahrzeug,
- Fig. 2 und 3: jeweils in perspektivischer Darstellung das Mähgerät im Arbeitseinsatz mit maximaler Auslage,
- Fig. 4: eine schematische Draufsicht auf das Mähgerät mit Mehrfachdarstellung des Mähwerks entsprechend dem Verlauf seiner rückwärtigen Ausschwenkbewegung,
- Fig. 5: eine Seitenansicht des Mähgeräts in zwei Positionen, nämlich in der fahrzeugnahen Arbeitsstellung und in der Transportstellung,
- Fig. 6 und 7: je eine perspektivische Ansicht des Mähgeräts in der Transportstellung.

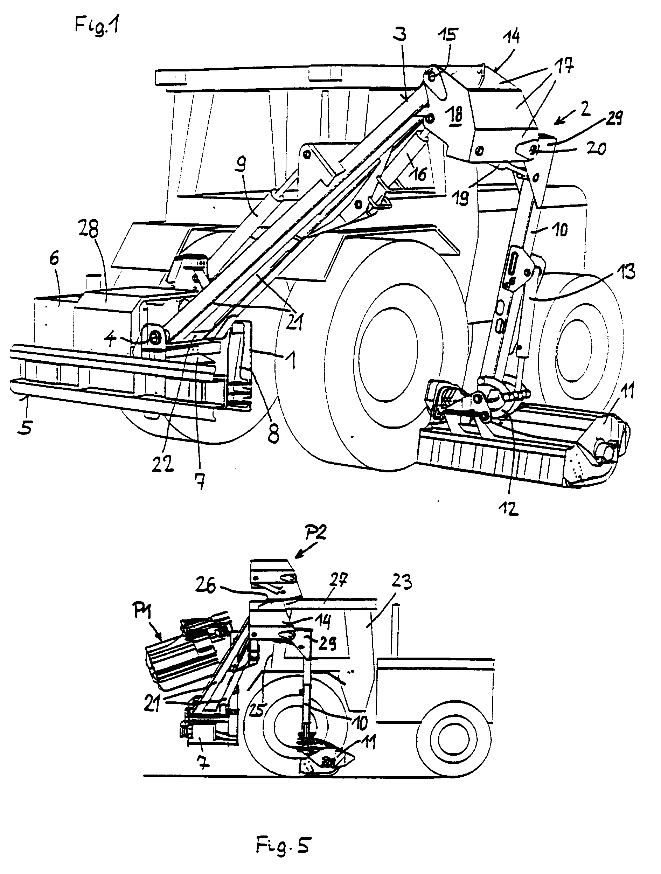

Fig. 1 zeigt in schräger Heckansicht einen Schlepper als Trägerfahrzeug mit einer heckseitigen Fahrzeugplatte 1, an welcher ein Mähgerät für den Heckanbau befestigt ist. Zu diesem Zweck ist ein Hauptarm 3 des Auslegers 2 mit seinem unteren Ende um eine etwa in Fahrzeuglängsrichtung verlaufende horizontale Schwenkachse 4 verschwenkbar angelenkt, welche in einem Rahmen 5 gelagert ist. Neben der Anlenkung des Hauptarms 3 sind auf dem Rahmen 5 noch ein Hydrauliktank 6, ein Steuerkasten 7 und eine Antriebseinheit 28 aufgebaut. Die Antriebseinheit 28 enthält eine über die Heckzapfwelle des Schleppers angetriebene hydraulische Kolbenpumpe für den Antrieb des Mähwerks und eine über Keilriemen angetriebene Zahnradpumpe für den Antrieb der Bewegungshydraulik sowie diverse Steuerblöcke für diese Antriebe; durch die beiden Pumpen ist die Unabhängigkeit der Bewegungshydraulik des Mähgeräts sowie des Mähwerksantriebs von der schlepperlast sicherstellt.

Der Rahmen 5 ist mittels einer Tragplatte 8 an der Fahrzeugplatte 1 befestigt. Neben dem Hauptarm 3 mit Betätigungszylinder 9 umfaßt der Ausleger 2 einen Pendelarm 10, an dessen freiem Ende ein Mähwerk 11 in Form eines Schlegelmähkopfs aufgehängt ist. Über eine Gelenkhebelverbindung 12, an welcher ein Betätigungszylinder 13 angreift, der andererseits am Pendelarm 10 abgestützt ist, ist das Mähwerk 11 in einer Ebene quer zur Fahrtrichtung des Schleppers verschwenkbar, so daß es der jeweiligen Neigung der Bankette bzw. Böschung angepaßt werden kann.

Hauptarm 3 und Pendelarm 10 sind über einen Gelenkkopf 14 miteinander verbunden. Der Gelenkkopf 14 ist über eine Schwenkachse 15 am oberen Ende des Hauptarms 3 angelenkt. Die Schwenkachse 15 des Gelenkkopfs 14 verläuft etwa parallel zur Schwenkachse 4 am unteren Ende des Hauptarms 3. Mittels eines Betätigungszylinders 16 auf der Unterseite des Hauptarms 3 kann der Gelenkkopf 14 gegenüber dem Hauptarm 3 angewinkelt oder gestreckt werden, je nachdem wie es die Auslageposition des Mähwerks erfordert. Der Gelenkkopf 14 besitzt ein in Fahrzeuglängsrichtung profiliertes Gehäuse 17, mit Stirnwänden 18, welches jedoch im übrigen zur Unterseite hin offen ist. Im Inneren des Gehäuses 17 ist ein Schwenkzylinder 19 schwenkbar abgestützt, dessen kolbenseitiges Ende auf der Rückseite des Pendelarms 10 angreift. Dadurch kann der Pendelarm 10 aus der gezeigten Strecklage in die weiter unten beschriebene Transportstellung zurückgeschwenkt werden. Er verschwenkt dabei um seine im Inneren des Gehäuses 17 des Gelenkkopfs 14 gelagerte Schwenkachse 20, welche im vorderen Bereich des Gelenkkopfs 14 etwa in einer Ebene senkrecht zur Fahrzeuglängsrichtung angeordnet ist. Das dem Gelenkkopf zugeordnete Ende des Pendelarms 10 ist über ein von diesem nach rückwärts abragendes Querteil 29 an der Schwenkachse 20 angelenkt.

Der Hauptarm 3 besteht aus zwei Holmen 21, die an ihrem unteren Ende über ein Lagerteil 22 zu einem Dreiecksträger verbunden sind. Die beiden Holme 21 laufen mit ihren oberen Enden zusammen und bilden dort die Lagerstelle für die Schwenkachse 15 des Gelenkkopfs 14.

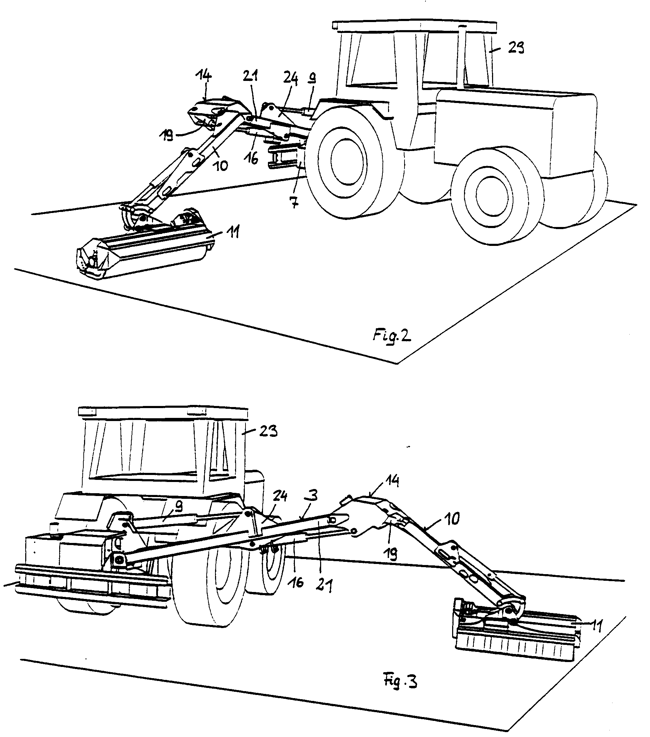

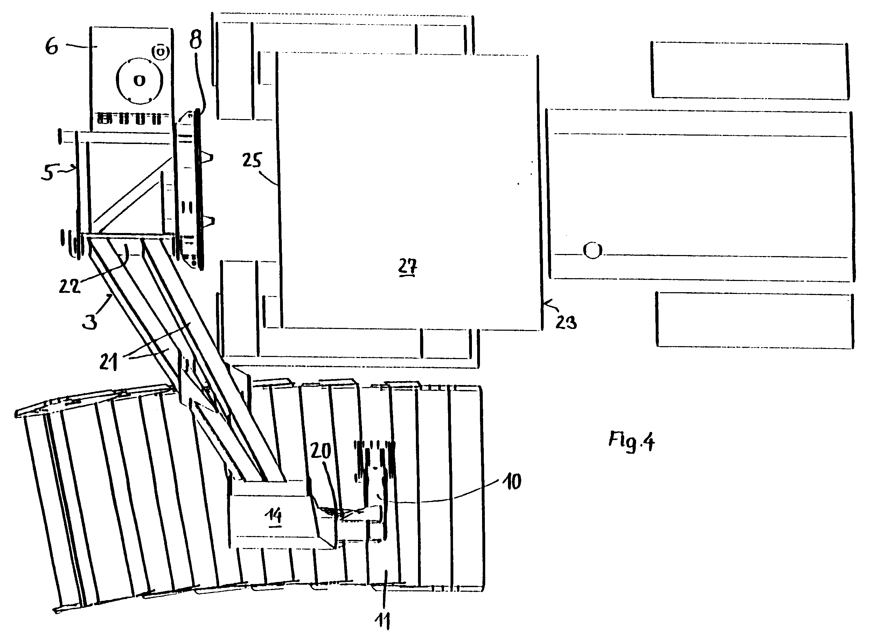

Die Fig. 2 und 3 zeigen jeweils dieselbe Arbeitsposition des Mähwerks 11, Fig. 2 in einer vorderen, Fig. 3 in einer hinteren Seitenansicht.

Gemäß den Fig. 2 und 3 ist der Ausleger 2 mit maximaler Auslage dargestellt, wobei das Mähwerk 11 auf dem Niveau des Schleppers in einer Arbeitsposition querab zur Fahrerkabine 23 des Schleppers arbeitet. Der Gelenkkopf 14 ist hierbei in seiner gestreckten Position, d. h. bei maximal ausgefahrenem Betätigungszylinder 16 gezeigt. Der Betätigungszylinder 9 für den Hauptarm 3 ist ebenfalls sehr weit ausgefahren, so daß der Hauptarm 3 zur Seite hin flach ansteigend verläuft. Für Arbeitspositionen des Mähwerks 11 unterhalb des Schlepperniveaus kann der Betätigungszylinder 9 noch weiter ausgefahren werden, so daß der Hauptarm 3 etwa horizontal orientiert ist. Der Pendelarm 10 ist in seiner vorderen Schwenkposition dargestellt, d. h. der hierfür verantwortliche Schwenkzylinder 19 ist weitgehend ausgefahren. Der Betätigungszylinder 9 für den Hauptarm 3 ist mit seinem ausfahrbaren Ende an einem Lagerbock 24 angelenkt, welcher über eine verbreiterte Basis mit den beiden Holmen 21 des Hauptarms 3 verschweißt ist, so daß er einen Beitrag zu dessen Aussteifung leistet.

Fig. 4 zeigt eine schematische Draufsicht auf den Schlepper, wobei die Fahrzeugplatte weggelassen ist. Man erkennt jedoch die rahmenseitige Tragplatte 8 des in der heckseitigen Anschlußposition mit Pumpengehäuse 6 dargestellten Rahmens 5, auf welchem andere Aufbauten nicht dargestellt sind. Fig. 4 zeigt sehr deutlich den Aufbau des Hauptarms 3 als Dreiecksträger aus den beiden Holmen 21 und dem rahmenseitigen Lagerteil 22.

Die beiden Holme 21 sind nicht etwa im Sinne eines gleichschenkeligen Dreiecks symmetrisch auf dem Lagerteil 22 aufgebaut sondern in einer Schräglage nach vorne, d. h. der vordere Holm 21 ist kürzer als der hintere Holm 21. Durch diese schräg nach vorne verlaufende Anordnung des Hauptarms 3 wird erreicht, daß der Gelenkkopf 14 unabhängig von der jeweiligen Schwenklage des Hauptarms 3, sich auf einer Kreisbahn in seitlicher Höhe der Rückwand 25 der Fahrerkabine 23 bewegt. In der gezeigten vorderen Arbeitsposition des Mähwerks 11 befindet sich dieses sehr genau in seitlicher Höhe zur Sitzposition des Fahrers bzw. Beifahrers in der Fahrerkabine 23. Damit ist eine ideale Blickkontrolle auf das Mähwerk 11 gewährleistet. Man erkennt in dieser Draufsicht ferner, daß das Mähwerk in der gezeichneten Arbeitsposition unmittelbar neben dem Fahrzeug arbeitet. Diese Arbeitsposition wird dadurch erreicht, daß der Pendelarm 10 über die Vertikale hinaus nach innen, d. h. in Richtung Trägerfahrzeug verschwenkt ist. In dieser Schwenkposition des Pendelarms 10 ist somit dessen Schwenkachse 20 am Gelenkkopf 14 von innen nach außen geringfügig schräg abfallend, so daß sich das Mähwerk 11 mit zunehmender Verschwenkung des Pendelarms 10 nach rückwärts - dieser Vorgang ist in der Fig. 4 in zahlreichen, sich überlagernden Zwischenpositionen dargestellt - zunehmend von der seitlichen Fahrzeugkontur entfernt, womit die Gefahr eines Anschlagens des Mähwerks 11 gegen das Trägerfahrzeug während des Zurückschwenkens des Mähwerks 11 in die Transportstellung nicht gegeben ist.

Wie man Fig. 4 entnehmen kann, läßt sich der Pendelarm 10 aus der gezeichneten seitlichen Arbeitsposition noch geringfügig nach vorne verschwenken, was zur Anpassung an ein geringfügig über dem Fahrzeugniveau liegendes Böschungsniveau vorteilhaft sein kann.

In der Seitenansicht gemäß Fig. 5 ist noch einmal die seitliche Mähposition des Mähwerks 11 gemäß Fig. 4 dargestellt. Der Gelenkkopf 14 befindet sich dabei mit seiner Oberkante etwa in Höhe der Oberkante der rückwärtigen Wand 25 der Fahrerkabine 23. Wie man auch in Fig. 4 erkennt, enden die Holme 21, die den Hauptarm 3 bilden, knapp hinter der Rückwand 25 der Fahrerkabine 23, so daß sie beim Aufschwenken des Hauptarms 3 in die in Fig. 5 oben noch eingezeichnete Transportstellung knapp hinter der Fahrerkabine 23 vorbeischwenken, während der Gelenkkopf 14 mit seinem vorderen Ende über die zugewandte obere Ecke 26 des Daches 27 der Fahrerkabine 23 hinwegschwenkt bis die Transportstellung erreicht ist. In der Transportstellung befindet sich das Mähwerk 11 in der gezeichneten Strecklage (Pfeil P1) innerhalb der Seitenkontur des Schleppers, während der Gelenkkopf 14 zum Teil über der hinteren Dachkante der Fahrerkabine 23 steht (Pfeil P2).

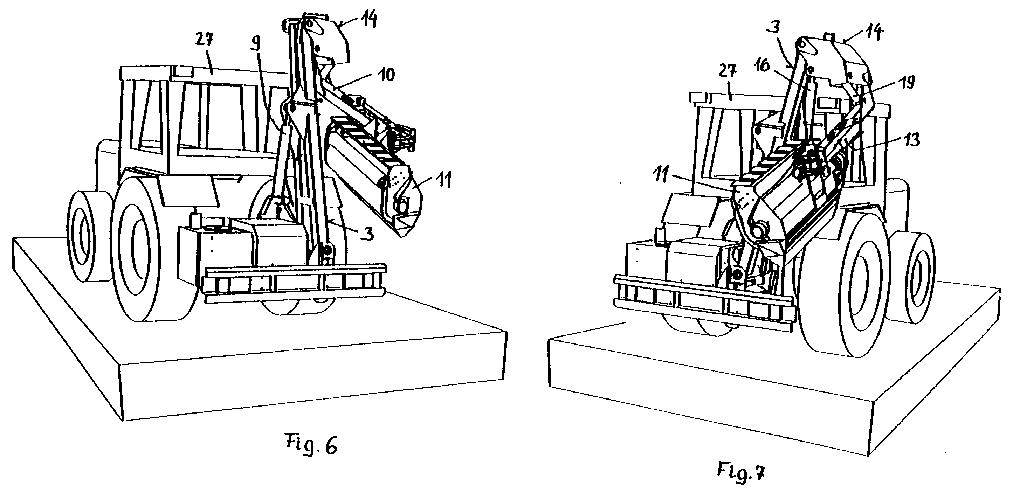

Gemäß den Fig. 6 und 7 ist der Schlepper mit dem Mähgerät in der Transportstellung einmal von links hinten (Fig. 6) und einmal von rechts hinten (Fig. 7) gezeigt. In dieser Transportstellung befindet sich der Gelenkkopf 14 über dem Dach 27 des Schleppers. Der Hauptarm 3 steht etwa senkrecht, wobei der zugehörige Betätigungszylinder 9 eingefahren ist. Dementsprechend ist auch der Schwenkzylinder 19 zur Betätigung des Pendelarms 10 vollständig eingefahren, so daß sich der Pendelarm 10 mit in die Strecklage gekipptem Mähwerk 11 in etwa oberhalb der Heckreifen des Schleppers befindet, während das Mähgerät in die Transportstellung nach innen verschwenkt wird. Der Gelenkkopf 14 ist maximal eingeklappt, d. h. auch dessen Betätigungszylinder 16 ist maximal verkürzt. Lediglich der Betätigungszylinder 13 für das Mähwerk 11 ist in der gestreckten Position dargestellt. Die damit erreichte Klappstellung des Mähwerks 11 auf der Innenseite des Pendelarms 10 hat den Vorteil, daß die Messerwelle nach innen zeigt, also von außen nicht ohne weiteres zugänglich ist. Denkbar ist aber auch die umgekehrte Klappstellung des Mähwerks 11, d. h. eine um 180° nach außen verschwenkte Klappstellung, in welcher der Betätigungszylinder 13 seine maximal verkürzte Position einnimmt. In diesem Fall kann es zweckmäßig sein, den Betätigungszylinder 9 für den Hauptarm 3 noch weiter zu verkürzen, so daß der Hauptarm sogar über die Vertikale in eine nach links geneigte Endposition kommt. Auf diese Weise kann sichergestellt werden, daß das in diesem Fall nach außen geklappte Mähwerk 11 sicher innerhalb der seitlichen Schlepperkontur plaziert ist. Mit dieser Variante wären sämtliche hydraulischen Kolben-Zylinder-Anordnungen des Mähgeräts im verkürztem korrosionsgeschütztem Zustand, während sich das Mähgerät in der Transportstellung befindet.

## Patentansprüche

1. An einem Trägerfahrzeug heckseitig anbaubares Mähgerät für Straßenböschungen und -banketten mit einem seitlich ausschwenkbaren Ausleger (2), dessen Hauptarm (3) an einem fahrzeugfesten Rahmen (5) angelenkt ist und einen Pendelarm (10) trägt, an dessen freiem Ende ein Mähwerk (11) aufgehängt ist,
dadurch gekennzeichnet,
daß der Hauptarm derart asymmetrisch ausgebildet ist, daß dessen oberes Ende gegenüber seiner fahrzeugseitigen Schwenklagerung nach vorne versetzt ist,
und daß Hauptarm (3) und Pendelarm (10) über einen am Hauptarm (3) angelenkten Gelenkkopf (14) miteinander verbunden sind, der zwischen Transport- und Arbeitsstellung eine Kreisbahn nahe der Rückwand (25) der Fahrerkabine (23) und über deren benachbarte obere Ecke (26) beschreibt und an dem in Fahrzeuglängsrichtung nach vorne versetzt der Pendelarm (10) angelenkt ist.

2. Mähgerät nach Anspruch 1,
dadurch gekennzeichnet,
daß der Gelenkkopf (14) am Hauptarm (3) um eine zu dessen Schwenkachse (4) etwa parallele Schwenkachse (15) verschwenkbar angelenkt ist und daß die Schwenkachse (20) des Pendelarms (10) am Gelenkkopf (14) in einer zu dessen Schwenkachse (15) etwa senkrechten Ebene liegt.

3. Mähgerät nach Anspruch 1,
dadurch gekennzeichnet,
daß der Hauptarm (3) zwischen seiner Schwenkachse (4) am Rahmen (5) und der Schwenkachse (15) des Gelenkkopfs (14) schräg nach vorne verläuft, derart, daß diese beiden Schwenkachsen in Fahrzeuglängsrichtung zueinander versetzt sind um eine Länge, welche etwa der Entfernung des Rahmens (5) von der Rückwand (25) der Fahrerkabine (23) entspricht.

4. Mähgerät nach Anspruch 1,
dadurch gekennzeichnet,
daß der Pendelarm (10) gegenüber dem Gelenkkopf (14) zwischen einer vorderen Arbeitsstellung, in welcher er sich etwa auf Höhe der Fahrerposition in einer Ebene senkrecht zur Fahrzeuglängsrichtung erstreckt, und einer hinteren Transportstellung, in welcher er sich in einer vertikalen, zur Fahrzeuglängsrichtung etwa parallelen Ebene erstreckt, verschwenkbar angelenkt ist.

5. Mähgerät nach Anspruch 1,
dadurch gekennzeichnet,
daß der Hauptarm (3) zwei verschieden lange Holme (21) umfaßt, welche mit einem rahmenseitigen Lagerteil (22) einen Dreiecksträger bilden, dessen Spitze nach vorne versetzt ist und die Schwenkachse (15) für den Gelenkkopf trägt.

6. Mähgerät nach Anspruch 1,
dadurch gekennzeichnet,
daß der Gelenkkopf (14) ein in Fahrzeuglängsrichtung profiliertes, nach unten offenes Gehäuse (17) aufweist, in welchem die Schwenkachsen (15, 20) für den Hauptarm (3) und den Pendelarm (10) gelagert sind.

7. Mähgerät nach Anspruch 1,
dadurch gekennzeichnet,
daß der Gelenkkopf (14) zwischen einer inneren, fahrzeugnahen und einer äußeren, fahrzeugfernen Arbeitsposition des Mähwerks (11) verschwenkbar ist, wobei der Hauptarm (3) zwischen einer steil und einer flach geneigten Schwenkposition je nach Auslage des Mähwerks verstellbar ist.

8. Mähgerät nach Anspruch 2, dadurch gekennzeichnet,
daß die Schwenkachse (20) des Pendelarms (10) in der maximal eingeschwenkten Position des Gelenkkopfs (14) von innen nach außen geringfügig schräg abfallend verläuft.

9. Mähgerät nach Anspruch 1,
dadurch gekennzeichnet,
daß am Rahmen (5) eine Tragplatte (8) vorgesehen ist, welche Verbindungselemente für deren lösbaren Anschluß an eine heckseitige Fahrzeugplatte (1) aufweist und daß am Rahmen (5) zumindest auf der dem Mähwerk (11) zugewandten Seite eine Stütze befestigt ist, welche den Rahmen (5) gegenüber der zugeordneten Radachse zusätzlich abstützt.

10. Mähgerät nach Anspruch 1,
dadurch gekennzeichnet,
daß der Hauptarm (3) in der Transportstellung steiler als in einer Arbeitsstellung, nämlich bis in die Vertikale oder noch darüber, aufgeschwenkt ist.

11. Mähgerät nach Anspruch 1,
dadurch gekennzeichnet,
daß hydraulische Kolben-Zylindereinheiten (9, 13, 16, 19) zum Betätigen des Hauptarms (3), des Gelenkkopfs (14), des Pendelarms (10) sowie zum Verschwenken des Mähwerks (11) gegenüber dem Pendelarm (10) vorgesehen sind, derart, daß in der Transportstellung alle Kolben eingefahren sind.

12. Mähgerät nach Anspruch 6,
dadurch gekennzeichnet,
daß die Schwenkachse (20) für den Pendelarm (10) nahe dem vorderen Ende des Gelenkkopfs (14) gelagert ist und daß das zugeordnete Ende des Pendelarms (10) über ein von diesem nach rückwärts abragendes Querteil (29) an der Schwenkachse angelenkt ist.

## Claims

1. Mowing device able to be mounted on the rear of a carrier vehicle, for embankments and verges with an arm (2) able to swing out to the side, whereof the main arm (3) is pivoted on a frame (5) integral with the vehicle and supports a swinging arm (10), on the free end of which a mower (11) is suspended, characterised in that the main arm is constructed asymmetrically so that its upper end is offset towards the front with respect to its swivelling mounting on the vehicle, and that the main arm (3) and swinging arm (10) are connected to each other by way of a coupling head (14) pivoted on the main arm (3), which coupling head (14) between the transportation position and working position describes a circular path close to the rear wall (25) of the driver's cab (23) and above its adjacent upper corner (26) and on which the swinging arm (10) is pivoted, offset towards the front in the longitudinal direction of the vehicle.

2. Mowing device according to Claim 1, characterised in that the coupling head (14) is pivoted on the main arm (3) to tilt about a swivel axis (15) approximately parallel to its swivel axis (4) and that the swivel axis (20) of the swinging arm (10) on the coupling head (14) lies in a plane approximately at right angles to its swivel axis (15).

3. Mowing device according to Claim 1, characterised in that the main arm (3) extends obliquely forwards between its swivel axis (4) on the frame (5) and the swivel axis (15) of the coupling head (14), so that these two swivel axes are offset with respect to each other in the longitudinal direction of the vehicle by a length which corresponds approximately to the distance of the frame (5) from the rear wall (25) of the driver's cab (23).

4. Mowing device according to Claim 1, characterised in that with respect to the coupling head (14), the swinging arm (10) is pivoted so that it is able to swing between a front working position, in which it extends approximately at the height of the driver's position in a plane at right angles to the longitudinal direction of the vehicle, and a rear transportation position, in which it extends in a vertical plane approximately parallel to the longitudinal direction of the vehicle.

5. Mowing device according to Claim 1, characterised in that the main arm (3) comprises two spars (21) of different length, which with a bearing part (22) adjacent the frame form a triangular support, whereof the vertex is offset forwards and supports the swivel axis (15) for the coupling head.

6. Mowing device according to Claim 1, characterised in that the coupling head (14) comprises a housing (17) profiled in the longitudinal direction of the vehicle and open on the under side, in which the swivel axes (15, 20) for the main arm (3) and the swinging arm (10) are mounted.

7. Mowing device according to Claim 1, characterised in that the coupling head (14) is able to tilt between an inner working position of the mower (11) close to the vehicle and an outer working position remote from the vehicle, the main arm (3) being adjustable between a swivelling position inclined steeply and in a shallow manner, according to the position of the mower.

8. Mowing device according to Claim 2, characterised in that in the position of the coupling head (14) swung inwards to the maximum extent, the swivel axis (20) of the swinging arm (10) extends so that it drops slightly obliquely from the inside outwards.

9. Mowing device according to Claim 1, characterised in that provided on the frame (5) is a support plate (8), which comprises connecting members for its detachable connection to a rear vehicle plate (1) and that attached to the frame (5) at least on the side facing the mower (11) is a support, which additionally supports the frame (5) with respect to the associated wheel axle.

10. Mowing device according to Claim 1, characterised in that in the transportation position, the main arm (3) is swung up more steeply than in a working position, namely into the vertical position or even beyond.

11. Mowing device according to Claim 1, characterised in that hydraulic piston/cylinder units (9, 13, 16, 19) are provided for actuating the main arm (3), the coupling head (14), the swinging arm (10) as well as for tilting the mower (11) with respect to the swinging arm (10) so that all pistons are retracted in the transportation position.

12. Mowing device according to Claim 6, characterised in that the swivel axis (20) for the swinging arm (10) is mounted close to the front end of the coupling head (14) and that the associated end of the swinging arm (10) is pivoted by way of a transverse part (29) projecting down rearwards from the latter, on the swivel axis.

## Revendications

1. Dispositif de fauchage susceptible d'être monté en position arrière sur un véhicule porteur pour l'entretien des talus et accotements de routes, comprenant une flèche (2) déployable latéralement par pivotement, dont le bras principal (3) est articulé sur un cadre (5) solidaire du véhicule et porte un bras pendulaire (10) à l'extrémité libre duquel est suspendue une tête faucheuse (11),
**caractérisé par le fait**
que le bras principal présente une configuration asymétrique telle que son extrémité libre soit décalée vers l'avant par rapport à son articulation de pivotement côté véhicule et que le bras principal (3) et le bras pendulaire (10) sont reliés entre eux en passant par une tête d'articulation (14) qui est articulée sur le bras principal (3), qui décrit entre la position de transport et la position de travail une trajectoire circulaire passant à proximité de la paroi arrière (25) de la cabine de conducteur (23) et au-dessus du coin supérieur voisin (26) de celle-ci et sur laquelle le bras pendulaire (10) est articulé dans une position décalée vers l'avant dans la direction longitudinale du véhicule.

2. Faucheuse suivant la revendication 1,
**caractérisée par le fait**
que la tête d'articulation (14) est articulée sur le bras principal (3) de manière à pouvoir pivoter autour d'un axe de pivotement (15) à peu près parallèle à l'axe de pivotement de ce bras et que l'axe de pivotement (20) du bras pendulaire (10) sur la tête d'articulation (14) est situé dans un plan qui est à peu près perpendiculaire à l'axe de pivotement (15) de cette dernière.

3. Faucheuse suivant la revendication 1,
**caractérisée par le fait**
que le bras principal (3) s'étend, entre son axe de pivotement (4) sur le cadre (5) et l'axe de pivotement (15) de la tête d'articulation (14), de façon oblique vers l'avant de telle manière que ces deux axes de pivotement soient décalés l'un par rapport à l'autre dans la direction longitudinale du véhicule d'une longueur correspondant à peu près à la distance séparant le cadre (5) de la paroi arrière (25) de la cabine de conducteur (23).

4. Faucheuse suivant la revendication 1,
**caractérisée par le fait**
que le bras pendulaire (10) est articulé de manière à pouvoir pivoter, par rapport à la tête d'articulation (14), entre une position de travail avant dans laquelle il s'étend à peu près à la hauteur de la position du conducteur dans un plan perpendiculaire à la direction longitudinale du véhicule, et une position de transport arrière dans laquelle il s'étend dans un plan vertical à peu près parallèle à la direction longitudinale du véhicule.

5. Faucheuse suivant la revendication 1,
**caractérisée par le fait**
que le bras principal (3) comprend deux longerons (21) de longueurs différentes qui constituent avec une traverse (22) côté cadre une poutre triangulaire dont la pointe est décalée vers l'avant et porte l'axe de pivotement (15) pour la tête d'articulation.

6. Faucheuse suivant la revendication 1,
**caractérisée par le fait**
que la tête d'articulation (14) présente un corps (17) profilé dans la direction longitudinale du véhicule et ouvert vers le bas, dans lequel sont montés les axes de pivotement (15, 20) pour le bras principal (3) et le bras pendulaire (10).

7. Faucheuse suivant la revendication 1,
**caractérisée par le fait**
que la tête d'articulation (14) peut pivoter entre une position de travail intérieure dans laquelle la tête faucheuse (11) est proche du véhicule et une position de travail extérieure dans laquelle la tête faucheuse (11) est éloignée du véhicule, le bras principal (3) étant mobile entre une position de pivotement fortement inclinée par rapport à la verticale et une position de pivotement faiblement inclinée par rapport à la verticale, selon la distance de la tête faucheuse par rapport au véhicule porteur.

8. Faucheuse suivant la revendication 2,
**caractérisée par le fait**
que l'axe de pivotement (20) du bras pendulaire (10), dans la position de pivotement maximale vers l'intérieur de la tête d'articulation ( 14), est orienté de manière à être légèrement incliné vers le bas de l'intérieur vers l'extérieur.

9. Faucheuse suivant la revendication 1,
**caractérisée par le fait**
que sur le cadre (5) est prévue une plaque de support (8) qui présente des éléments de liaison pour son raccordement amovible à une plaque arrière (1) du véhicule et que sur le cadre (5) est fixé, au moins sur le côté tourné vers la tête faucheuse (11), un appui qui sert d'appui supplémentaire au cadre (5) par rapport à l'essieu associé.

10. Faucheuse suivant la revendication 1,
**caractérisée par le fait**
que le bras principal (3), dans la position de transport, est davantage dressé que dans une position de travail, à savoir jusqu'à la verticale ou au-delà.

11. Faucheuse suivant la revendication 1,
**caractérisée par le fait**
que des vérins hydrauliques (9, 13, 16, 19) sont prévus pour l'actionnement du bras principal (3), de la tête d'articulation (14), du bras pendulaire (10) ainsi que pour le pivotement de la tête faucheuse (11) par rapport au bras pendulaire (10), de telle manière que tous les pistons soient rentrés dans la position de transport.

12. Faucheuse suivant la revendication 6,
**caractérisée par le fait**
que l'axe de pivotement (20) pour le bras pendulaire (10) est monté à proximité de l'extrémité avant de la tête d'articulation (14) et que l'extrémité associée du bras pendulaire (10) est articulée sur l'axe de pivotement en passant par une pièce transversale (29) faisant saillie vers l'arrière sur ce bras.
